# EUROPEAN PATENT APPLICATION

(11) **EP 2 123 422 A1**
(43) Date of publication of application: **25.11.2009**
(21) Application number: 08013987.6
(22) Date of filing: 05.08.2008
(51) Int. Cl.: B29C 45/26, B29C 45/36

(54) **Method and apparatus for molding battery vessels**

(30) Priority: 20.05.2008 IT MI20080924
(71) Applicant: Macrelli, Mario, 20059 Vimercate (MI) (IT)
(72) Inventor: Macrelli, Mario, 20059 Vimercate (MI) (IT)
(74) Representative: Cicogna, Franco

(57) **Abstract**

An improved method for injection molding plastic material battery vessels, in particular large size battery vessels comprises the steps of starting to inject a plastic material at a maximum injection pressure and rate, detecting the filling-in of the mold and, as the mold has been filled into 95% of its full volume, controllably adjusting and stabilizing the injection pressure and rate to allow the mold to be fully filled, while properly driving and locking the plugs or male elements of the mold.

## Description

### BACKGROUND OF THE INVENTION

The present invention relates to a method and apparatus for injection molding plastic material battery vessels, in particular large size and longitudinal extension electric battery vessels to be used for industrial electric batteries for driving, stationary and engine starting applications.

As is known, the above electric batteries usually comprise plastic material vessels having a comparatively large longitudinal extension.

A main problem to be solved in making the above battery vessels, by injection molding methods, is that to assure an even filling-in of the molds, just due to the comparatively large longitudinal size of said molds.

Yet another problem is that the molding injection plug or male elements tend to be deflected under the high injection pressure, thereby it is necessary to properly lock the mold male elements for preventing them from being deflected and damaged.

### SUMMARY OF THE INVENTION

Accordingly, the aim of the present invention is to provide such a method and apparatus for overcoming the above prior art problems affecting prior battery vessel molding methods and apparatus.

Within the scope of the above mentioned aim, a main object of the invention is to provide such a method and apparatus allowing to make large size and longitudinal extension injected plastic material battery vessels.

Another object of the present invention is to provide such a method and apparatus which are very safe and reliable in operation, while allowing to provide very high structural strength battery vessels.

Another object of the present invention is to provide such a method and apparatus which can also be easily fitted to already existing battery vessel injecting molds.

According to one aspect of the present invention, the above mentioned aim and objects, as well as yet other objects, which will become more apparent hereinafter, are achieved by a method and apparatus for molding electric battery vessels according to the accompanying claims.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

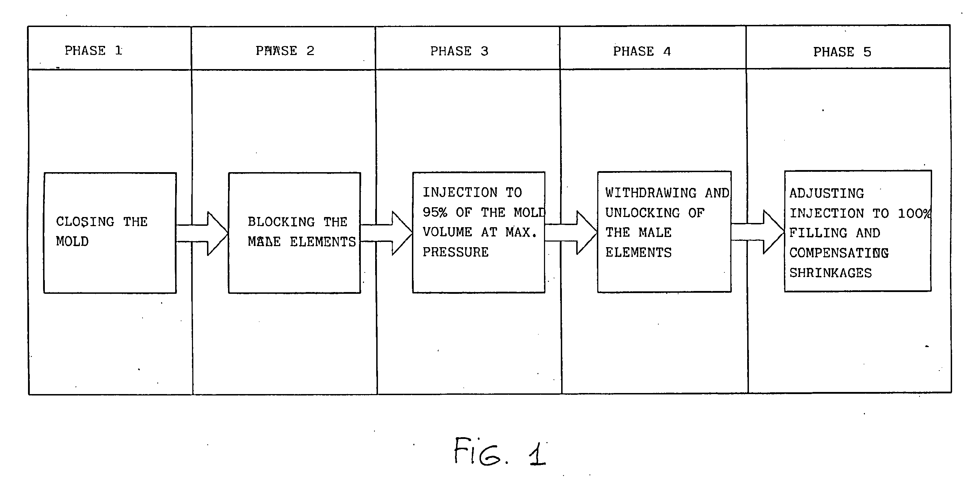

Figure 1 is a sequential diagram showing the method according to the present invention for injection molding large size plastic material electric battery vessel;

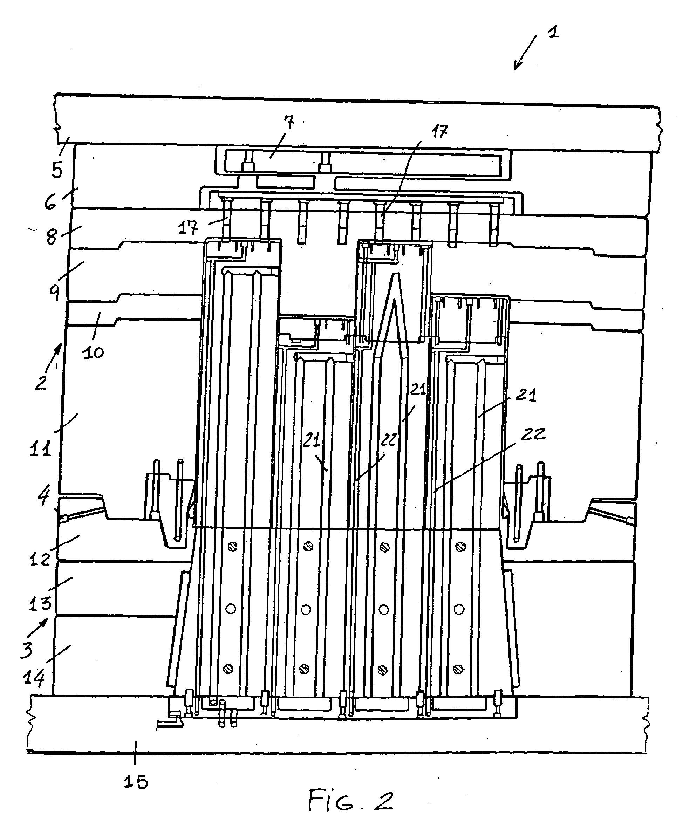

Figure 2 is an elevation, cross-sectional view, of a mold according to the present invention shown in a closed condition thereof;
Figure 3 is a further elevation, cross-sectional view, similar to figure 2, of the mold according to the present invention, and being shown in an open condition thereof; and

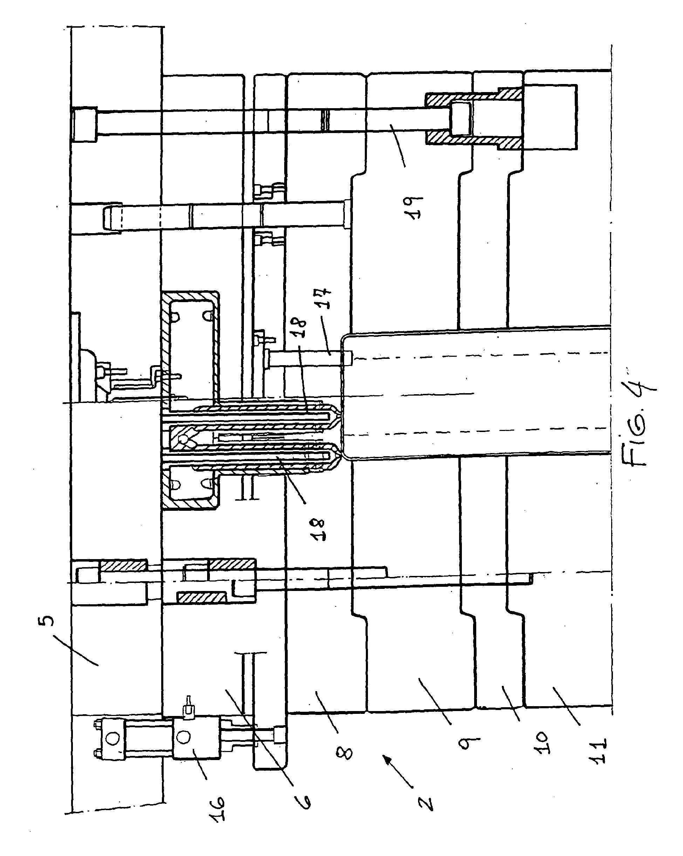

Figure 4 is a further elevation, cross-sectional view, on an enlarged scale, showing in detail the injection molding apparatus according to the invention.

### DESCRIPTION OF THE PREFERRED EMBODIMENTS

The improved molding method according to the present invention for making electric battery vessels, for traction or drive, stationary and starting application, comprises a method step pattern designed to evenly mold battery vessels even of large size and longitudinal extension.

According to the present invention, the method provides to perform a substantial and controlled modification of the injection pressure and speed or rate, according to specifically designed operating times and parameters.

Actually, upon having started the plastic material injection, at a maximum injection pressure and speed, specifically designed sensors detect as the injection mold has been filled to 95% of its inner volume, and only then the operating pressure is so adjusted and stabilized, depending on the above mentioned specifically designed parameters, for allowing the mold to be filled-in to 100% of its volume.

In particular, the method comprises the steps of:
providing an electric battery plastic material vessel injection molding mold, said mold having a fixed mold part and a movable mold part, said movable mold part including a plurality of male elements;
closing said movable mold part against said fixed mold part;
locking said male elements of said mold;
injecting into said mold a battery vessel molding plastic material up to 95% of an inner volume of said mold, at a maximum injection pressure and rate;
unlocking said male elements; and
adjustably injecting into said mold a further amount of said battery vessel molding plastic material to fully fill said inner volume of said mold while compensating for plastic material shrinkages.

The inventive apparatus for carrying out the inventive method, and which can also be applied to existing injection molds comprises, according to a preferred embodiment thereof, a plastic material injection molding mold, generally indicated by the reference number 1, comprising a mold fixed portion 2 and a mold movable portion 3 defining a closing plane therebetween.

The fixed part or portion 2 comprises, in turn, a top plate 5, a housing plate 6 including a distributing chamber 7, a shared driving plate 8, a further modular drive plate 9, a further middle drive plate 10, and yet a further bottom drive plate 11.

The movable part 3 comprises, furthermore, an end withdrawal plate 2, a first-withdrawal plate 13, a male element bearing plate 14, and a bottom plate 15.

The bottom plate 15 and male element bearing plate 14 are coupled to one another.

A hydraulic piston 16, rigid with or integral with the housing plate 6, allows to drive a plurality of reed element 17 for sealing the plug or male elements of the injection mold.

A plurality of injection nozzles 18 are arranged in the housing plate 6 and extend into the shared driving plate 8.

The fixed part 2 making plates are fixedly coupled by clamping screws 19.

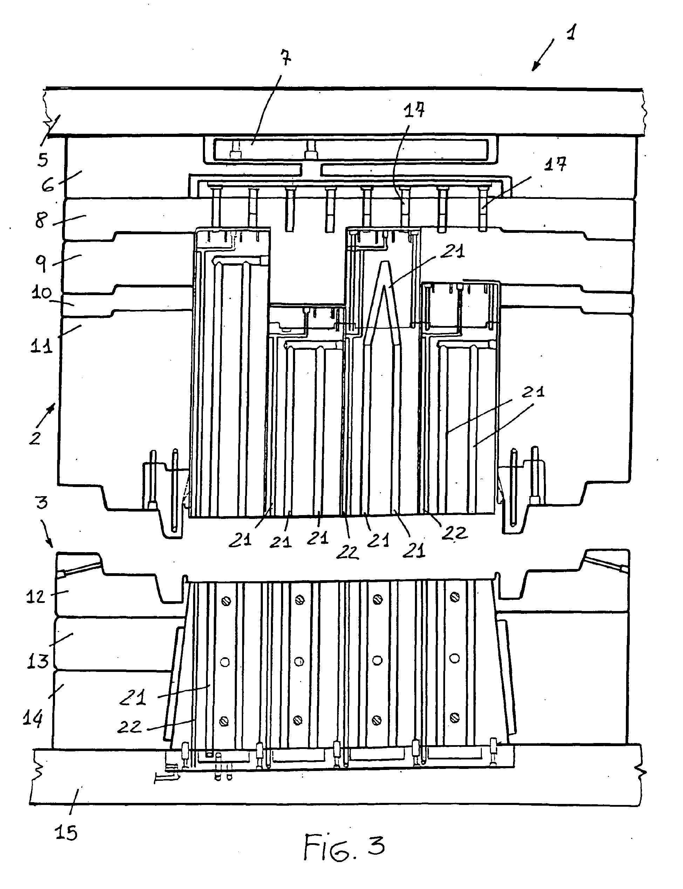

In figure 3, the reference number 20 shows an assembling screw for assembling the modular plate 9.

The mold 1 comprises a cooling system including a refrigerating circuit 21 for circulating therethrough a refrigerating or cooling liquid, preferably water, and an air circuit 22 for removing the molded piece or battery vessel from the mold.

In particular, at the end of the molding method, the fixed male part 2 is moved away from the movable mold part 3, while the molded piece or vessel will remain in the movable or male part according to two steps.

In other words, the first-withdrawal plate 13 will perform a first operating stroke of about 60 mm, together with the end withdrawal plate 12, as is shown in figure 3.

Then, the end withdrawal plate 12 will perform, at a second time, the withdrawal of the molded piece or vessel, consisting of a box-like body having a size of approximately 1200 x 700 x 1390 mm, and comprising separating walls, housing therebetween the lead elements and acid solution (not specifically shown) forming the electric battery adjoining cells.

According to the present invention, a piston 16 allows to drive the male element sealing reed or blade elements 17, to in turn suitably restrain or lock, through the movable plates, the male elements.

This will be performed for any battery vessel molds, to prevent the mold male elements from being offset from their axes and deformed during the high pressure plastic material injection operation.

It has been found that the invention fully achieves the intended aim and objects.

In fact, the invention provides a molding method and apparatus which can be applied also to existing molds for making battery vessels, and allow to make battery vessels even of a very large size and longitudinal extension.

In particular, the inventive method prevents the mold male elements from being deformed and/or offset or deflected during the plastic material injection.

In practicing the invention, the used materials, as well as the contingent size and shapes, can be any, depending on requirements.

## Claims

1. A method for molding electric battery plastic material vessels, in particular of large size and longitudinal extension, **characterized in that** said method comprises the steps of:
providing an electric battery plastic material vessel injection molding mold, said mold having a fixed mold part and a movable mold part, said movable mold part including a plurality of male elements;
closing said movable mold part against said fixed mold part;
locking said male elements of said mold;
injecting into said mold a battery vessel molding plastic material up to 95% of an inner volume of said mold, at a maximum injection pressure and rate;
unlocking said male elements; and
adjustably injecting into said mold a further amount of said battery vessel molding plastic material to fully fill said inner volume of said mold while compensating for plastic material shrinkages.

2. A method according to claim 1,
**characterized in that** said method further comprises the step of detecting, by a plurality of sensors, upon starting an injection of said plastic material, when said plastic material has filled said mold to 95% of said inner volume of said mold and then adjusting and stabilizing the injection pressure to allow said mold to be fully filled-in by said plastic material.

3. A method according to claim 1,
**characterized in that** said method further comprises as said mold has been filled to 95% of its inner volume, a step of substantially controllably modifying said pressure and injection rate based on target injection times and parameters.

4. An apparatus for carrying out the method according to claim 1, **characterized in that** said apparatus comprises a plastic material injection mold, said mold including a fixed mold part and a movable mold part, said fixed mold part and movable mold part defining a mold closure plane, said mold fixed part including a top plate, a housing plate including a distributing chamber therein, a shared driving plate, a modular driving plate, a middle driving plate and a bottom driving plate, said movable part including an end withdrawal plate, a first-withdrawal plate, a male element bearing plate, supporting a plurality of male elements, and a bottom plate, said bottom plate and male element bearing plate being coupled to one another, a hydraulic piston, rigid with said housing plate for driving male element sealing reed elements, injection nozzles being arranged in said housing plate and extending into said shared driving plate, and driving means for driving said male elements, locking means for locking said male elements to prevent said male elements from being deformed and offset as said apparatus operates for injecting molding said electric battery plastic material vessels.

5. An apparatus according to claim 4,
**characterized in that** said reed elements are so designed as to operatively tightly seal said male elements.

6. An apparatus according to claim 4,
**characterized in that** said apparatus comprises manual or magnetic drive means.

7. An apparatus according to claim 4,
**characterized in that** said plates forming said mold fixed part are clamped to one another by clamping screw.

8. An apparatus according to claim 4,
**characterized in that** said injection mold comprises a cooling system including a cooling circuit allowing a cooling liquid to circulate therethrough, and an air circuit for removing from said mold a molded electric battery plastic material vessel.

9. An apparatus according to claim 4,
**characterized in that** said apparatus comprises driving means for separating, upon molding, said mold fixed part from said mold movable part, while allowing an injection molded vessel to remain in said movable part, said driving means driving at first said first withdrawal plate to perform an operating stroke together with said end withdrawal plate, and then further driving said end withdrawal plate for removing a molded vessel.

10. An apparatus according to claim 9,
**characterized in that** said first stroke of said first-withdrawal plate substantially corresponds to 60 mm.

11. An apparatus according to claim 4,
**characterized in that** said injection molded vessel is a box vessel having a size of substantially 1200 x 700 x 1390 mm.
